# EUROPÄISCHE PATENTSCHRIFT

(11) **EP 0 613 413 B1**
(45) Veröffentlichungstag und Bekanntmachung des Hinweises auf die Patenterteilung: **19.03.1997**
(21) Anmeldenummer: 92919295.3
(22) Anmeldetag: 15.09.1992
(51) Int. Cl.: B29B 17/02, B29K 69/00, B29L 17/00

(54) **VERFAHREN UND VORRICHTUNG ZUM MECHANISCHEN ENTFERNEN EINER SCHICHT AUF DEM BASISMATERIAL EINES PLATTENFÖRMIGEN INFORMATIONSTRÄGERS**
PROCESS AND DEVICE FOR MECHANICALLY REMOVING A LAYER FROM THE SUBSTRATE MATERIAL OF A DISK-SHAPED INFORMATION CARRIER
PROCEDE ET DISPOSITIF POUR ENLEVER MECANIQUEMENT UNE COUCHE SITUEE SUR LE MATERIAU DE BASE D'UN SUPPORT D'INFORMATIONS SE PRESENTANT SOUS FORME DE DISQUE

(43) Veröffentlichungstag der Anmeldung: 07.09.1994
(73) Patentinhaber: WITT, Georg, D-38126 Braunschweig (DE)
(72) Erfinder: WITT, Georg, D-38126 Braunschweig (DE)
(74) Vertreter: Lins, Edgar, Dipl.-Phys. Dr.jur.
(86) Internationale Anmeldenummer: DE9200803
(87) Internationale Veröffentlichungsnummer: WO9406608

(56) Entgegenhaltungen:
- EP-A- 0 286 961
- DE-A- 3 511 711

## Beschreibung

Die Erfindung betrifft ein Verfahren zum mechanischen Entfernen von Fremdstoffen vom Basismaterial eines plattenförmigen Informationsträgers, insbesondere eines optisch abtastbaren Informationsträgers, zur Rückgewinnung des Basismaterials. Die Erfindung betrifft ferner eine Vorrichtung zur Durchführung des Verfahrens.

Die Herstellung derartiger plattenförmiger Informationsträger, wie optisch auslesbarer Videoplatten oder Digitaler Audioplatten (Compakt-Disks) gelingt derzeit nur mit einer relativ hohen Ausschußrate, so daß ca. 50 % des eingesetzten Ausgangs-Rohmaterials als Ausschußmaterial anfällt. Zur Verminderung der Abfallmenge ist daher vorgeschlagen worden, das Basismaterial für die plattenförmigen Informationsträger, in der Regel Polycarbonat, zurückzugewinnen, um es nach einer Granulierung wieder für die Herstellung der plattenförmigen Informationsträger benutzen zu können. Hierfür ist erforderlich, daß die Fremdstoffe, die sich bei den genannten Informationsträgern regelmäßig auf einer Seite über die gesamte Oberfläche des Informationsträgers erstrecken, zuverlässig entfernt werden, damit das Basismaterial in der benötigten Reinheit zur Wiederverwendung zur Verfügung steht.

Die Fremdstoffe auf einer Compakt-Disk bestehen aus einer Metallschicht, einer Lackschicht und einem Farbaufdruck. Es ist vorgeschlagen worden, diese Fremdstoffe chemisch zu entfernen. Hierbei entstehen weitere Entsorgungsprobleme durch die verwendeten aggressiven chemischen Materialien.

Es ist ferner vorgeschlagen worden, die Fremdstoffe mechanisch zu entfernen, und zwar durch die Anwendung eines Partikelstrahls oder eines abrasiven Werkzeugs, das zum Abschleifen des Fremdmaterials führt. Auch diese Verfahren haben nicht die erwünschten Erfolge gezeitigt.

Durch EP-A-0 286 961 ist eine Vorrichtung bekannt, mit der ein Ende eines dünnen Kunststoffilms auf einer gedruckten Schaltungsplatte abgehoben werden kann. Der durchsichtige Kunststoffilm dient als Schutzschicht während der Herstellung der Schaltungsplatte und muß vor der Fertigstellung der Schaltungsplatte zur weiteren Bearbeitung der Schaltungsplatte entfernt werden. Hierzu wird auf die Kante des Kunststoffilms ein seitlicher Druck ausgeübt, durch den der Kunststoffilm von der darunter liegenden Schaltungsplatte bzw. einer auf der Schaltungsplatte gut haftenden photoempfindlichen Schicht abhebt, ohne daß dabei der Kunststoffilm beschädigt wird. Nach dem Abheben des Randes wird der Kunststoffilm durch ein unter Druck stehendes Fluid von dem Substrat abgehoben. Die bekannte Vorrichtung dient somit zum Anheben einer Kante eines leicht von dem Substrat abhebbaren Schutzfilms und ist daher beispielsweise zum Entfernen der fest mit dem Substrat verbundenen Metallschicht und Lackschicht eines plattenförmigen Informationsträgers nicht geeignet.

Der Erfindung liegt daher die Aufgabe zugrunde, eine zuverlässige mechanische Entfernung der Fremdstoffe vom Basismaterial der plattenförmigen Informationsträger zu ermöglichen, wobei durch die Entfernung der Fremdstoffe keine neuen Entsorgungsprobleme entstehen sollen.

Diese Aufgabe wird erfindungsgemäß mit einem Verfahren der eingangs erwähnten Art dadurch gelöst, daß die die Fremdstoffe enthaltende Beschichtung von dem Basismaterial durch einen spanabhebenden Schnitt entfernt werden und daß der plattenförmige Informationsträger während des Schnitts von seiner mit den Fremdstoffen aufgebauten Oberseite aus in eine Aufnahme zur Lagefixierung gedrückt wird.

Der der Erfindung zugrundeliegende Gedanke besteht demgemäß darin, die die Fremdstoffe enthaltende Schicht durch einen Schnitt mit einer definierten Schnittiefe zu entfernen, wobei sich der Schnitt über die gesamte Breite des Informationsträgers erstrecken kann, so daß mit einem einzigen ziehenden Schnitt die gesamte, die Fremdstoffe enthaltende Beschichtung von dem Basismaterial abgeschält wird.

Die kritische Einhaltung der definierten Schnittiefe wird dadurch erreicht, daß der Informationsträger während des Schnitts von seiner Oberseite aus in eine Aufnahme zur Lagefixierung gedrückt wird. Die durch eine Vertiefung gebildete Aufnahme hat dabei vorzugsweise einen Durchmesser, der dem Außendurchmesser des plattenförmigen Informationsträgers entspricht. Durch das Drücken des Informationsträgers in die Aufnahme wird eine sichere Positionierung des Informationsträgers während des Schnitts erreicht.

Für die Durchführung des erfindungsgemäßen Verfahrens sind keine verunreinigenden Hilfsstoffe, wie Chemikalien oder abrasive körnige Materialien, erforderlich. Die die Fremdstoffe enthaltende Schicht fällt in Form von Spänen an und kann anschließend zerkleinert und entsorgt werden. Die von den Fremdstoffen befreite Platte aus dem Basismaterial steht in reiner Form mit einer vergleichsweise hohen Oberflächengüte zur Verfügung, die noch dadurch gesteigert werden kann, daß zumindest die die Fremdstoffe aufweisende Oberseite des plattenförmigen Informationsträgers vor dem Schnitt befeuchtet wird. Die Befeuchtung kann sich dabei allerdings auch auf den gesamten Informationsträger beziehen.

Bevorzugt wird ein Schnittwinkel von +/- 10^{o} verwendet. Insbesondere bei der Anwendung eines negativen Schnittwinkels läßt sich eine hohe Oberflächengüte des verbleibenden Basismaterials erzielen.

Der Informationsträger wird vorzugsweise in der Aufnahme zusätzlich mit an der Unterseite angreifenden Saugern gehalten.

Die Schnittiefe wird zweckmäßigerweise so eingestellt werden, daß sie die Dicke der die Fremdstoffe enthaltenden Schicht etwas übersteigt, so daß eine dünne Oberflächenschicht des Basismaterials ebenfalls abgetragen wird. Dadurch wird die Sicherheit vergrößert, daß nur noch reines Basismaterial zurückbleibt und wieder verwendet werden kann.

Die der Erfindung zugrundeliegende Aufgabe wird ferner durch eine Vorrichtung zur Durchführung des Verfahrens gelöst, die besteht aus einem Werkzeugunterteil mit einer Aufnahme zur Fixierung des plattenförmigen Informationsträgers und einem relativ zum Werkzeugunterteil parallel zu dessen Oberfläche verschiebbarem Werkzeugoberteil mit einem eine Schicht von der Oberfläche des plattenförmigen Informationsträgers abschälenden Messer und einem auf der Oberfläche des plattenförmigen Informationsträgers geführte Niederhalter, der in Schneidrichtung vor dem Messer angeordnet ist.

Das Messer weist dabei quer zu seiner Bewegungsrichtung vorzugsweise eine Breite auf, die größer oder gleich dem Durchmesser des Informationsträgers ist, so daß die die Fremdstoffe enthaltende Schicht mit einem Schnitt abgeschält werden kann.

Der erfindungsgemäß vorgesehene, dem Messer vorlaufende Niederhalter kann durch einen zusätzlichen, dem Messer nachlaufenden Niederhalter ergänzt sein. Der Niederhalter, insbesondere der vorlaufende Niederhalter, weist vorzugsweise die Breite des Messers auf und kann mit einer solchen Länge ausgebildet sein, daß er Praktisch vollflächig auf dem Informationsträger aufliegen kann.

Es kann vorteilhaft sein, die Anordnung aus Niederhalter und Messer vor der Bewegung in Schneidrichtung senkrecht zur Oberfläche des Informationsträgers auf diese Oberfläche zuzustellen, um eine günstige Beschickung der Aufnahme mit den plattenförmigen Informationsträgern zu erlauben. Dabei kann die Schneidkante des Messers gegenüber dem Niederhalter einen definierten, die Schnittiefe bestimmenden Vorstand aufweisen. Diese Anordnung hat den Vorteil, daß unterschiedliche Dicken der optischen Informationsträger, die auf unterschiedliche Dicken des Basismaterials zurückzuführen sind, während die Dicke der die Fremdstoffe enthaltenen Schicht praktisch immer gleich ist, automatisch kompensiert werden. Es ist alternativ aber auch möglich, mit einer konstanten Schnittiefe zu arbeiten, die relativ zum Werkzeugunterteil eingestellt ist, wobei die Schnittiefe so eingestellt ist, daß die die Fremdstoffe enthaltende Beschichtung bei der minimalen Dicke des Basismaterials innerhalb der festgestellten Toleranzbreite abgeschält wird. Für dickere Basismaterialien wird eine entsprechende Schicht des Basismaterials in diesem Fall mit abgeschält.

Es ist vorteilhaft, die Tiefe der Aufnahme im Werkzeugunterteil kleiner als die Mindestdicke des Informationsträgers vermindert um die Schnittiefe auszubilden. Dadurch wird erreicht, daß die Schneidkante des Messers sicher mit Abstand von der Oberseite des Werkzeugunterteils parallel zu dieser Oberseite bewegt werden kann, ohne daß die Gefahr einer Berührung von Messer und Werkzeugunterteil besteht.

Zur saugenden Fixierung des plattenförmigen Informationsträgers in der Aufnahme können im Werkzeugunterteil Vakuumleitungen ausgebildet sein, die in den Boden der Aufnahme münden.

Eine weitere Fixierung des plattenförmigen Informationsträgers kann dadurch erreicht werden, daß ein mittiger Zentrierbolzen der Aufnahme in eine Mittelöffnung des eingelegten plattenförmigen Informationsträgers hineinragt.

Die Erfindung ist besonders geeignet für die Entfernung von Fremdstoffe enthaltende Schichten von Compakt-Disks, auf denen die Fremdstoffe in einer einseitig auf dem Basismaterial befindlichen Beschichtung vorhanden sind. Es ist allerdings auch möglich, die Erfindung bei beidseitig beschichteten plattenförmigen Trägern zu verwenden, wobei beide Oberflächen des plattenförmigen Trägers in der erfindungsgemäßen Weise bzw. mit einer erfindungsgemäßen Vorrichtung bearbeitet werden müßten.

Bevorzugte Schnittwinkel sind + 4^{o} bis + 8^{o} bzw. - 4^{o} bis - 8^{o}. In Versuchsanordnungen sind die besten Ergebnisse mit Schnittwinkeln von + 4° bis + 6° bzw. - 4° bis - 6° erzielt worden.

Die Erfindung soll im folgenden anhand von in der Zeichnung dargestellten Ausführungsbeispielen näher erläutert werden. Es zeigt:
- Figur 1 -: einen Vertikalschnitt durch eine Anordnung aus Werkzeugoberteil und Werkzeugunterteil mit einem eingelegten plattenförmigen Informationsträger
- Figur 2 -: ein Detail A aus Figur 1
- Figur 3 -: eine schematische Draufsicht auf die Anordnung gemäß Figur 1 mit Andeutung zweier Arbeitsstellungen
- Figur 4 -: eine schematische Darstellung der Schneidbedingungen für das über den Informationsträger bewegte Messer
- Figur 5 -: eine schematische Darstellung eines negativen Schneidwinkels.

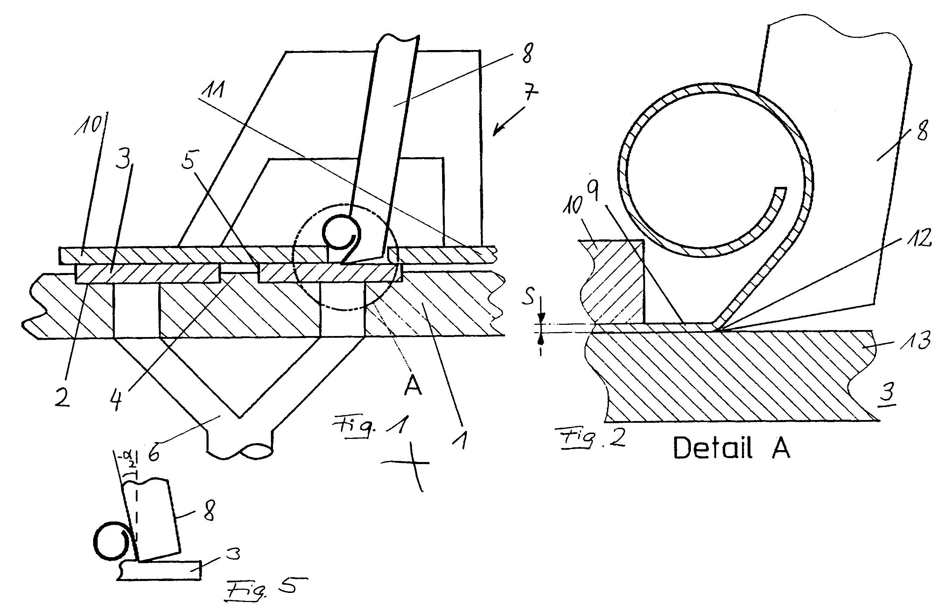

Figur 1 läßt ein Werkzeugunterteil 1 erkennen, in dem sich eine Aufnahme 2 in Form einer runden Ausnehmung befindet, in die ein plattenförmiger Informationsträger 3 in Form einer Compakt-Disk eingelegt ist. Zur Zentrierung dient ein zentrischer Zentrierbolzen 4 der Aufnahme, der in eine Mittelöffnung der Compakt-Disk teilweise hineinragt. Im Bereich der Aufnahme 2 weist das Werkzeugunterteil 1 Vakuumleitungen 6 auf, in denen ein Unterdruck erzeugbar ist, so daß die Compakt-Disk 3 auf den Boden der Ausnehmung 2 gesaugt wird. Die in den Boden einmündenden Saugleitungen 6 sind konzentrisch um den Mittelbolzen 4 herum angeordnet. Es können 6, 8 oder mehrere solcher Saugleitungen vorgesehen sein.

Figur 1 läßt ferner ein Werkzeugoberteil 7 in seiner Arbeitsstellung erkennen, in der ein am Werkzeugoberteil 7 befestigtes Messer 8 von der Oberseite der Compakt-Disk 3 eine Schicht 9 spanabhebend abzieht. Das in Figur 1 von rechts nach links geführt Messer 8 wird hinter einem vorderen Niederhalter 10 und vor einem nachlaufenden Niederhalter 11 geführt. Die Niederhalter 10, 11 verhindern ein Abheben der Compakt-Disk 3 aus der Aufnahme 2.

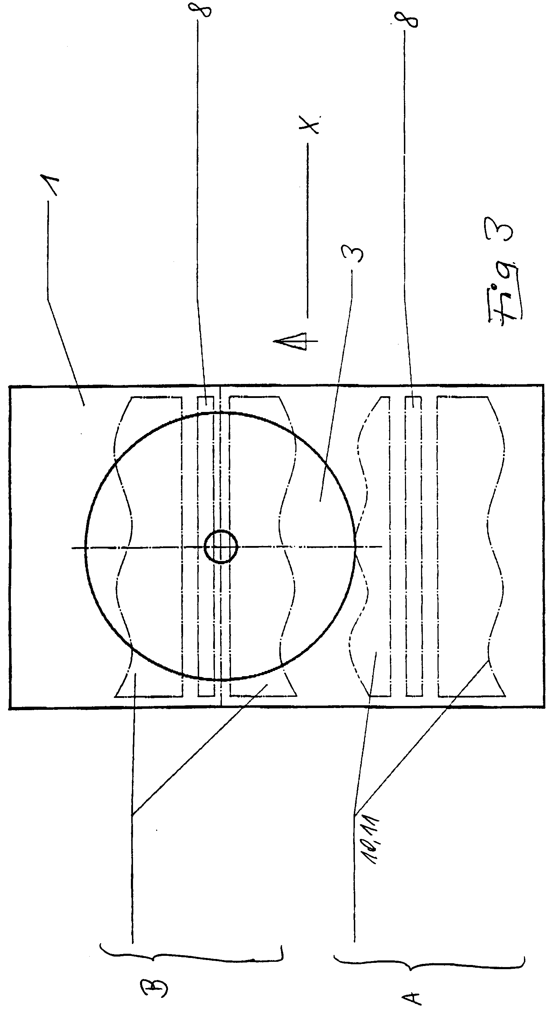

Figur 2 läßt erkennen, daß sich die Schnittiefe S aus einer fest eingestellten Differenz der Unterseite des vorderen Niederhalters 10 und der Tiefe einer vorderen Schneidkante 12 des Messers 8 ergibt. Die Schnittiefe S bestimmt somit auch die Dicke der durch das Messer 8 abgeschälten Schicht 9 von dem Basismaterial 13 der Compakt-Disk 3.

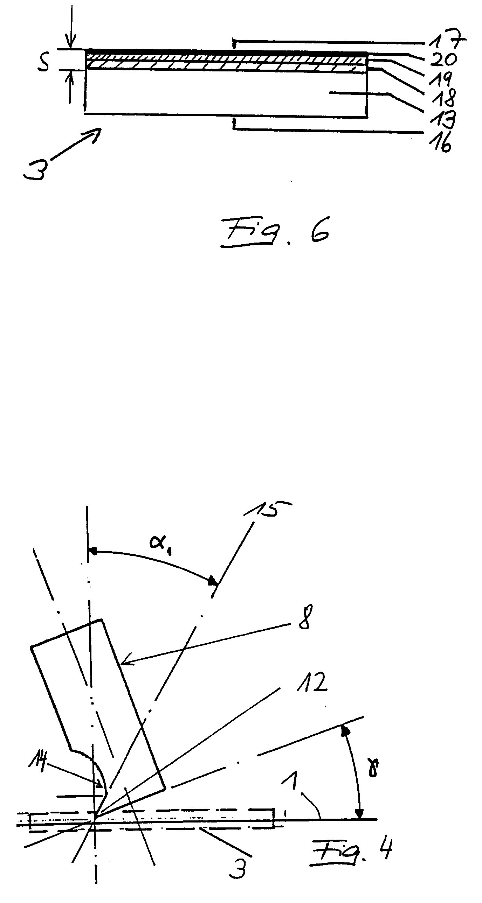

Figur 3 verdeutlicht, daß das Werkzeugoberteil 7 mit dem Messer 8 und den beiden Niederhaltern 10, 11 aus einer in Figur 3 mit A bezeichneten Anfangsstellung parallel zur Oberseite des Werkzeugunterteils 1 in Schnittrichtung X geführt wird, wobei in Figur 3 eine Arbeitsstellung B eingezeichnet ist, in der sich das Messer 8 in Schnittrichtung kurz hinter der Mitte der Compakt-Disk 3 befindet.

Für die Niederhaltung der Compakt-Disk 3 in der Aufnahme 2 ist der vorlaufende Niederhalter 10 von einer größeren Bedeutung als der nachlaufende Niederhalter 11.

Figur 4 verdeutlicht eine Form des Messer 8, das oberhalb einer vorderen Schneidkante in Schnittrichtung vorn eine Spanaufnahmekammer 14 aufweist. Als Schnittwinkel 1 des Messer 8 wird der Winkel zwischen der Senkrechten zur Oberfläche der Compakt-Disk 3 und der Neigung 15 der vorlaufenden Flanke der Schneidkante 12 bezeichnet. Der Winkel zwischen der Unterseite des Werkzeugs und der Oberseite des Werkzeugunterteils 1 wird als Freiwinkel bezeichnet.

Als vorteilhaft haben sich Schneidwinkel zwischen + 10^{o} und - 10^{o} herausgestellt. Figur 4 zeigt in übertriebener Darstellung einen positiven Schneidwinkel 1, während Figur 5 einen negativen Schneidwinkel - 2 verdeutlicht, der einem spanabhebenden Schabevorgang entspricht.

Die Ausbildung eines negativen Schneidwinkels - 2 birgt Vorteile für die Oberflächengüte des verbleibenden Basismaterials 13.

Figur 6 verdeutlicht den üblichen Aufbau einer Compakt-Disk 3, die eine Abtastseite 16 auf der Seite des Basismaterials 13 und eine gegenüberliegende bedruckte Oberfläche 17 aufweist, die - ausgehend von dem Basismaterial 13 - durch eine Metallschicht 18, eine Lackschicht 19 und einen Farbaufdruck 20 für das Label gebildet ist.

Figur 6 läßt erkennen, daß die Schnittiefe S so eingestellt wird, daß alle Schichten 18, 19, 20 sicher entfernt werden und daß eine dünne Schicht auch des Basismaterials 13 abgeschält wird, um ein gut verwertbares reines Basismaterial 13 zurückzubehalten.

## Patentansprüche

1. Verfahren zum mechanischen Entfernen von Fremdstoffen vom Basismaterial (13) eines plattenförmigen Informationsträgers (3), insbesondere eines optisch auslesbaren Informationsträgers, zur Rückgewinnung des Basismaterials (13), **dadurch gekennzeichnet, daß** die die Fremdstoffe (18, 19, 20) enthaltende Beschichtung von dem Basismaterial (13) durch einen spanabhebenden Schnitt entfernt werden und daß der plattenförmige Informationsträger (3) während des Schnitts von seiner mit den Fremdstoffen (18, 19, 20) aufgebauten Oberseite aus in eine Aufnahme (2) zur Lagefixierung gedrückt wird.

2. Verfahren nach Anspruch 1, dadurch gekennzeichnet, daß sich der Schnitt über die gesamte Breite des plattenförmigen Informationsträgers (3) erstreckt.

3. Verfahren nach Anspruch 1 oder 2, dadurch gekennzeichnet, daß die die Fremdstoffe (18, 19, 20) aufweisende Oberseite des Informationsträgers (3) vor dem Schnitt befeuchtet wird.

4. Verfahren nach einem der Ansprüche 1 bis 3, dadurch gekennzeichnet, daß ein Schnittwinkel ( 1, - 2) von +/- 10^{o} verwendet wird.

5. Verfahren nach Anspruch 4, gekennzeichnet durch die Anwendung eines negativen Schnittwinkels (- 2).

6. Verfahren nach einem der Ansprüche 1 bis 5, dadurch gekennzeichnet, daß der Informationsträger (3) in die Aufnahme (2) zusätzlich mit an der Unterseite angreifenden Saugern (6) gehalten wird.

7. Vorrichtung zur Durchführung des Verfahrens nach einem der Ansprüche 1 bis 6, bestehend aus einem Werkzeugunterteil (1) mit einer Aufnahme (2) zur Fixierung des plattenförmigen Informationsträgers (3), einem relativ zum Werkzeugunterteil (1) parallel zu dessen Oberfläche verschiebbaren Werkzeugoberteil (7) mit einem eine Schicht (9) von der Oberfläche des plattenförmigen Informationsträgers (3) abschälenden Messer (8) und einem auf der Oberfläche des plattenförmigen Informationsträgers (3) geführte Niederhalter (10), der in Schneidrichtung (X) vor dem Messer (8) angeordnet ist.

8. Vorrichtung nach Anspruch 7, dadurch gekennzeichnet, daß das Messer (8) eine Breite aufweist, die größer oder gleich dem Durchmesser des plattenförmigen Informationsträgers (3) ist.

9. Vorrichtung nach Anspruch 7 oder 8, gekennzeichnet durch einen zusätzlichen, dem Messer (8) nachlaufenden Niederhalter (11).

10. Vorrichtung nach einem der Ansprüche 7 bis 9, dadurch gekennzeichnet, daß der Niederhalter (10, 11) die Breite des Messers (8) aufweist.

11. Vorrichtung nach Anspruch 10, dadurch gekennzeichnet, daß der Niederhalter (10, 11) eine Mindestlänge aufweist, die größenordnungsmäßig dem Durchmesser des Informationsträgers (3) entspricht.

12. Vorrichtung nach einem der Ansprüche 7 bis 11, dadurch gekennzeichnet, daß die Anordnung aus Niederhalter (10, 11) und Messer (8) vor der Bewegung in Schneidrichtung (X) senkrecht zur Oberfläche des Informationsträgers (3) auf diese absenkbar ist.

13. Vorrichtung nach einem der Ansprüche 7 bis 12, dadurch gekennzeichnet, daß die Schneidkante (12) des Messers (8) gegenüber dem vorlaufenden Niederhalter (10) einen definierten, die Schnittiefe (S) bestimmenden Vorstand aufweist.

14. Vorrichtung nach einem der Ansprüche 7 bis 13, dadurch gekennzeichnet, daß die Tiefe der Aufnahme (2) kleiner ist als die Mindestdicke des Informationsträgers (3) vermindert um die Schnittiefe (S).

15. Vorrichtung nach einem der Ansprüche 7 bis 14, gekennzeichnet durch im Werkzeugunterteil (1) ausgebildete Vakuumleitungen (6), die in den Boden der Aufnahme (2) münden.

16. Vorrichtung nach einem der Ansprüche 7 bis 15, dadurch gekennzeichnet, daß die Aufnahme (2) einen mittigen, in eine Mittelöffnung (5) des eingelegten plattenförmigen Informationsträgers (3) hineinragenden Zentrierbolzen (4) aufweist.

## Claims

1. Process for mechanically removing foreign substances from the base material (13) of a disc-shaped information carrier (3), particularly an optically readable information carrier, to recover the base material (13), characterized in that the coating containing the foreign substances (18, 19, 20) is removed from the base material (13) by means of a chip-removing cut and in that in the course of the cut the disc-shaped information carrier (3) is pressed into a mounting (2) for positional fixing from its upper side bearing the foreign substances (18, 19, 20).

2. Process according to Claim 1, characterized in that the cut extends over the entire width of the disc-shaped information carrier (3).

3. Process according to Claim 1 or 2, characterized in that the upper side of the information carrier (3) having the foreign substances (18, 19, 20) is moistened before the cut.

4. Process according to one of Claims 1 to 3, characterized in that a cutting angle (α1, - α2) of +/- 10° is used.

5. Process according to Claim 4, characterized by the use of a negative cutting angle (- α2).

6. Process according to one of Claims 1 to 5, characterized in that the information carrier (3) is additionally held in the mounting (2) with suction devices (6) engaging on the underside.

7. Device for implementing the process according to one of Claims 1 to 6, comprising a tool lower part (1) with a mounting (2) for fixing the disc-shaped information carrier (3), a tool upper part (7) which is displaceable with respect to the tool lower part (1) parallel to its surface and which has a knife (8) scraping off a layer (9) from the surface of the disc-shaped information carrier (3) and a holding-down device (10) which is guided on the surface of the disc-shaped information carrier (3) and is arranged in front of the knife (8) in the cutting direction (X).

8. Device according to Claim 7, characterized in that the knife (8) has a width which is greater than or equal to the diameter of the disc-shaped information carrier (3).

9. Device according to Claim 7 or 8, characterized by an additional holding-down device (11) following the knife (8).

10. Device according to one of Claims 7 to 9, characterized in that the holding-down device (10, 11) has the width of the knife (8).

11. Device according to Claim 10, characterized in that the holding-down device (10, 11) has a minimum length which corresponds to the diameter of the information carrier (3) in terms of order of magnitude.

12. Device according to one of Claims 7 to 11, characterized in that the arrangement comprising holding-down device (10, 11) and knife (8) can be lowered onto the surface of the information carrier (3) perpendicular to it prior to the movement in cutting direction (X).

13. Device according to one of Claims 7 to 12, characterized in that the cutting edge (12) of the knife (8) has a defined projection determining the cutting depth (S) with respect to the preceding holding-down device (10).

14. Device according to one of Claims 7 to 13, characterized in that the depth of the mounting (2) is smaller than the minimum thickness of the information carrier (3) minus the cutting depth (S).

15. Device according to one of Claims 7 to 14, characterized by vacuum lines (6) which are formed in the tool lower part (1) and open into the bottom of the mounting (2).

16. Device according to one of Claims 7 to 15, characterized in that the mounting (2) has a central centring bolt (4) projecting into a central opening (5) of the inserted disc-shaped information carrier (3).

## Revendications

1. Procédé pour l'enlèvement mécanique de matières étrangères d'un matériau de base (13) d'un support d'informations (3) en forme de disque, en particulier d'un support d'informations à lecture optique, en vue de la récupération du matériau de base (13), caractérisé en ce que le revêtement contenant les matières étrangères (18, 19, 20) est enlevé du matériau de base (13) par une découpe d'enlèvement d'un copeau, et en ce que, pour être immobilisé pendant la découpe, le support d'informations (3) en forme de disque est repoussé par sa face supérieure constituée des matières étrangères (18, 19, 20) dans un réceptacle (2).

2. Procédé selon la revendication 1, caractérisé en ce que la découpe s'étend sur toute la largeur du support d'informations (3) en forme de disque.

3. Procédé selon les revendications 1 ou 2, caractérisé en ce que la face supérieure du support d'informations (3), qui présente les matières étrangères (18, 19, 20), est humidifiée avant la découpe.

4. Procédé selon l'une des revendications 1 à 3, caractérisé en ce que l'on utilise un angle de coupe (α1, -α2) de +/- 10°.

5. Procédé selon la revendication 4, caractérisé par l'utilisation d'un angle de coupe (-α2) négatif.

6. Procédé selon l'une des revendications 1 à 5, caractérisé en ce que le support d'informations (3) est en plus maintenu dans le réceptacle (2) par une aspiration (6) agissant sur sa face inférieure.

7. Dispositif en vue de la réalisation du procédé selon l'une des revendications 1 à 6, constitué d'une partie inférieure (1) d'outil présentant un réceptacle (2) pour l'immobilisation du support d'informations (3) en forme de disque, d'une partie supérieure d'outil (7) qui peut être déplacée par rapport à la partie inférieure d'outil (1), parallèlement à la surface de celle-ci, et comportant un couteau (8) enlevant une couche (9) de la surface du support d'informations (3) en forme de disque et un dispositif de retenue (10) guidé sur la surface du support d'informations (3) en forme de disque, et qui est disposé en avant du couteau (8) dans la direction de coupe (X).

8. Dispositif selon la revendication 7, caractérisé en ce que le couteau (8) présente une largeur qui est supérieure ou égale au diamètre du support d'informations (3) en forme de disque.

9. Dispositif selon les revendications 7 ou 8, caractérisé par un dispositif de retenue (11) supplémentaire se déplacant en arrière du couteau (8).

10. Dispositif selon l'une des revendications 7 à 9, caractérisé en ce que les dispositifs de retenue (10, 11) ont la même largeur que le couteau (8).

11. Dispositif selon la revendication 10, caractérisé en ce que les dispositifs de retenue (10, 11) présentent une longueur minimale qui correspond à l'ordre de grandeur du diamètre du support d'informations (3).

12. Dispositif selon l'une des revendications 7 à 11, caractérisé en ce qu'avant le déplacement dans la direction de coupe (X), l'agencement constitué des dispositifs de retenue (10, 11) et du couteau (8) peut être abaissé perpendiculairement à la surface du support d'informations (3) et jusque sur celle-ci.

13. Dispositif selon l'une des revendications 7 à 12, caractérisé en ce que le bord de coupe (12) du couteau (8) présente par rapport au dispositif de retenue avant (10) une avance définie qui détermine la profondeur de coupe (S).

14. Dispositif selon l'une des revendications 7 à 13, caractérisé en ce que la profondeur du réceptacle (2) est inférieure à l'épaisseur minimale du support d'informations (3) diminuée de la profondeur de coupe (S).

15. Dispositif selon l'une des revendications 7 à 14, caractérisé par des conduites sous vide (6) formées dans la partie inférieure (1) de l'outil et débouchant dans le fond du réceptacle (2).

16. Dispositif selon l'une des revendications 7 à 15, caractérisé en ce que le réceptacle (2) présente un goujon central de centrage (4), qui pénètre dans une ouverture centrale (5) du support d'informations (3) en forme de disque posé dans le réceptacle.
